# EUROPÄISCHE PATENTSCHRIFT

(11) **EP 0 673 525 B1**
(45) Veröffentlichungstag und Bekanntmachung des Hinweises auf die Patenterteilung: **05.03.1997**
(21) Anmeldenummer: 94901747.9
(22) Anmeldetag: 10.12.1993
(51) Int. Cl.: G06F 13/36, G06F 13/40

(54) **ANORDNUNG MIT MEHREREN FUNKTIONSEINHEITEN**
ARRANGEMENT WITH SEVERAL FUNCTIONAL UNITS
AGENCEMENT COMPRENANT PLUSIEURS UNITES FONCTIONNELLES

(30) Priorität: 14.12.1992 DE 4242133
(43) Veröffentlichungstag der Anmeldung: 27.09.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEME, Franz-Clemens, D-76227 Karlsruhe (DE)
(86) Internationale Anmeldenummer: DE9301185
(87) Internationale Veröffentlichungsnummer: WO9414120

(56) Entgegenhaltungen:
- IBM TECHNICAL DISCLOSURE BULLETIN Bd. 33, Nr. 12 , Mai 1991 , NEW YORK, US Seiten 451 - 453 'Bus arbiter with synchronised reset'
- IBM TECHNICAL DISCLOSURE BULLETIN Bd. 27, Nr. 5 , Oktober 1984 , NEW YORK, US Seiten 3150 - 3152 'Multiplexing of interrupt and DMA request lines'
- IBM TECHNICAL DISCLOSURE BULLETIN Bd. 32, Nr. 4A , September 1989 , NEW YORK, US Seiten 32 - 33 'Switched bus for high-performance multi-processor systems'

## Beschreibung

Die Erfindung betrifft eine Anordnung gemäß dem Oberbegriff des Anspruchs 1.

Aus dem Siemens-Katalog "SIMATIC S5, ST 54.1", Ausgabe 1992, ist ein speicherprogrammierbares Automatisierungsgerät bekannt, das aus Zentral- und Erweiterungsgeräten besteht. Die Geräte weisen Steckplätze zur Aufnahme von Baugruppen auf, von denen sogenannte Zentralbaugruppen (CPU's) Steuerprogramme bearbeiten und digitale bzw. analoge Ein-/Ausgabebaugruppen zur digitalen bzw. analogen Ein- und Ausgabe von Signalen vorgesehen sind. Zur Bearbeitung von komplexen Steuerungsaufgaben werden gewöhnlich mehrere CPU's eingesetzt, wozu ein sogenannter Koordinator erforderlich ist, der die Buszugriffe der CPU's regelt. Der Koordinator muß in einen eigens dafür vorgesehenen Steckplatz gesteckt werden.
Aus der Druckschrift "Bussysteme - Parallele und serielle Bussysteme in Theorie und Praxis", Seiten 43 bis 58, B. Wiemann, 1984, ist bekannt, innerhalb eines Bussystems einen zentralen Busteilnehmer über jeweils zwei Stichleitungen mit anderen Busteilnehmern zu verbinden. Der zentrale Busteilnehmer übernimmt zum Verwalten eines Busses die Funktion eines Arbiters, dem die anderen Teilnehmer über eine Leitung Busanforderungen zuführen. Über die jeweilige zweite Leitung teilt der Arbiter den Teilnehmern Buszuteilungsentscheidungen mit.

Aus der Veröffentlichung "IBM Technical Disclosure Bulletin", Mai 1991, US, Nr. 12, ist eine Anordnung der eingangs genannten Art bekannt. Dort sind Synchronisationsmittel vorgesehen, die während einer Initialisierungsphase bewirken, daß alle Arbiter der Anordnung ihren Prioritätscode aus einem Prioritätscode-Register auslesen und der Arbiter mit der höchsten Priorität aktiviert wird. Während des Betriebs ändern sich die Prioritäten der Arbiter, und es wird immer der Arbiter aktiviert, welcher gerade die höchste Priorität aufweist (verteilte Arbitrierung). Die Einheit, deren Arbiter aktiviert ist, führt einen Lese- oder Schreibzugriff aus, wobei nach diesem Zugriff ein Prioritätswechsel vorgesehen ist.

Der vorliegenden Erfindung liegt die Aufgabe zugrunde, eine Anordnung der eingangs genannten Art zu schaffen, in der ein zum Verwalten eines Busses erforderlicher Busteilnehmer (Arbiter) in jeden Steckplatz steckbar ist.

Diese Aufgabe wird durch die im kennzeichnenden Teil des Anspruchs 1 angegebenen Maßnahmen gelöst.

Vorteilhaft ist, daß zur Verwaltung des Systembusses keine besondere Baugruppe erforderlich ist. Jede Funktionseinheit, die dazu geeignet ist, Lese- und/oder Schreibzugriffe auszuführen (CPU-Baugruppe), ist mit einem Arbiter versehen. Welcher Arbiter aktiviert wird und welche passiv geschaltet bleiben, wird während einer Anlaufphase (z. B. während einer Initialisierungsphase nach dem Einschalten einer Versorgungsspannung) ermittelt.

Die erfindungsgemäße Anordnung wird insbesondere in einer speicherprogrammierbaren Steuerung eingesetzt, vorzugsweise in einer speicherprogrammierbaren Steuerung mit einem Zentralgerät und mindestens einem Erweiterungsgerät, die über ein den Systembus und Adreßleitungen aufweisendes Verbindungskabel miteinander verbunden sind.

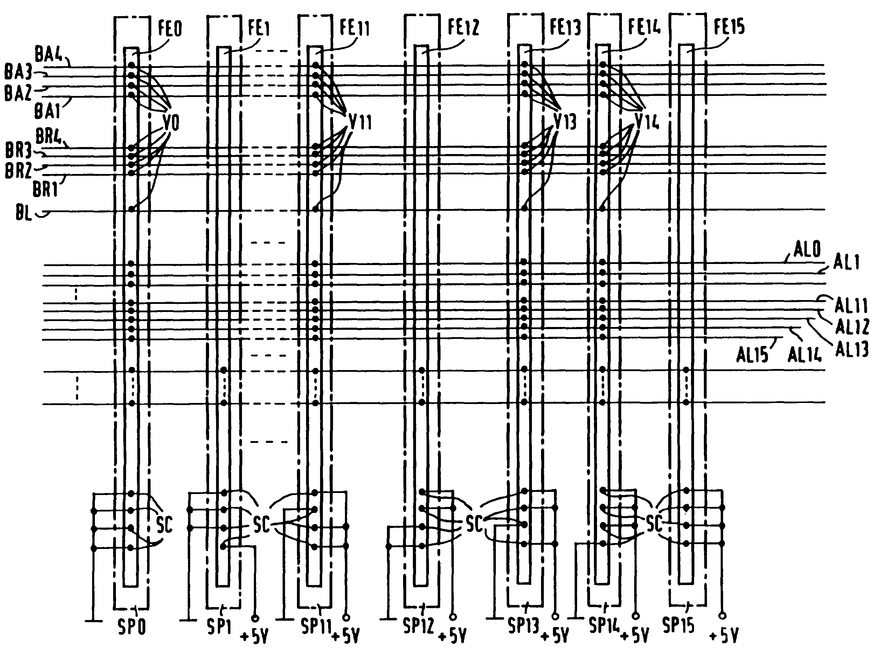

Anhand der Zeichnung, in der ein Ausführungsbeispiel der Erfindung veranschaulicht ist, wird die Erfindung näher erläutert.

Die Figur zeigt ein Prinzipschaltbild einer Anordnung mit Steckplätzen.

Mit SP0 ... SP15 sind Steckplätze bezeichnet, die über einen mehrere Daten- und Steuerleitungen aufweisenden Systembus SYB und über Adreßleitungen AL0 ... AL15 miteinander verbunden sind. In diesen Steckplätzen SP0 ... SP15 stecken Funktionseinheiten FE0 ... FE15, wozu die Steckplätze SP0 ... SP15 und die Funktionseinheiten FE0 ... FE15 entsprechende Verbindungsmittel, z. B. in Form von Feder- oder Messerkontakten, aufweisen. Im vorliegenden Beispiel sind lediglich vier Funktionseinheiten geeignet, Schreib- und/oder Lesezugriffe auf andere Einheiten auszuführen, so daß vier Busanforderungs- und vier Buszuteilungsleitungen BA1 ... BA4; BR1 ... BR4 sowie eine Busverriegelungsleitung BL für die Verwaltung des Systembusses SYB ausreichen. Diese Leitungen sind an die Verbindungsmittel der Steckplätze SP0 ... SP15 geführt. Die Funktionseinheiten FE0 ... FE15 sind beliebig in die Steckplätze SP0 ... SP15 steckbar, wozu die für die Ausführung von Schreib- und/oder Lesezugriffen geeigneten Einheiten Verbindungsmittel zum Kontaktieren mit den Busanforderungs- und Buszuteilungsleitungen sowie der Busverriegelungsleitung aufweisen. Im Beispiel sind die Funktionseinheiten FE0, FE11, FE13 und FE14 mit solchen Verbindungsmitteln versehen, um entsprechende Verbindungen V0, V11, V13 und V14 mit den Steckplätzen SP0, SP11, SP13 und SP14 und somit mit der Busverriegelungsleitung BL und den Busanforderungs- und Buszuteilungsleitungen BA1 ... BA4; BR1 ... BR4 herzustellen. Die Steckplätze SP0 ... SP15 sind jeweils mit einem Steckplatzcode versehen, wozu Anschlüsse SC der Steckplätze SP0 ... SP15 entsprechend dem vorgesehenen Code mit einer Masseverbindung und einer 5-Volt-Versorgungsspannungsquelle verbunden sind. Dem Steckplatz SP0 ist der Code 0000, dem Steckplatz SP1 der Code 0001 usw. zugeordnet, wobei die Steckplatzcodes in entsprechende Steckplatzcoderegister der Funktionseinheiten FE0, ... hinterlegt sind.

Die Funktionseinheiten FE0, FE11, FE13 und FE14 weisen jeweils zum Verwalten des Systembusses SYB einen hier nicht dargestellten Arbiter auf, der während des Betriebs nach einem an sich bekannten Auswahlverfahren (z. B. prioritätsgesteuertes oder reihenfolgegesteuertes Auswahlverfahren) Busanforderungen der Einheiten bearbeitet und die Einheit ermittelt, die die Buszuteilung erhalten soll. Diese bekannten Auswahlverfahren sind für die Erfindung unwesentlich und werden daher nicht näher erläutert. Die Arbiter sind in einem Grundzustand passiv geschaltet. Welche Arbiter passiv geschaltet bleiben und welcher aktiv geschaltet wird, um die Busverwaltung zu übernehmen, wird in einer Anlaufphase (z. B. während einer Initialisierungsphase nach dem Einschalten einer Versorgungsspannung) ermittelt. Dazu ist es zunächst erforderlich, z. B. in einem dafür vorgesehenen, von den vier Funktionseinheiten FE0, FE11, FE13 und FE14 abzuarbeitenden Programm vorzugeben, welcher Arbiter dieser Funktionseinheiten die Busverwaltung übernehmen soll. Es wird angenommen, daß ausgehend von dem Steckplatz SP0 der Arbiter der zweiten Funktionseinheit aktiviert werden soll, was mit einem entsprechenden Auswahlcode im Programm angezeigt wird. Das bedeutet im vorliegenden Beispiel, daß der Arbiter der Funktionseinheit FEll für die Busverwaltung vorgesehen ist. Die Vorgabe des zu aktivierenden Arbiters geschieht zweckmäßig während der Inbetriebnahme der Anordnung, und der Auswahlcode wird in ein entsprechendes Programm hinterlegt. Man kann aber auch ein sogenanntes Set-Up-Programm vorsehen, das mit jedem Systemstart automatisch anläuft und den Anwender auffordert, den Auswahlcode einzugeben.
Wie in der deutschen Patentanmeldung P 42 39 030.3 vorgeschlagen, sind die Adreßleitungen AL0 ... AL15 von Steckplatz zu Steckplatz an deren Verbindungsmittel geführt. Weiterhin sind die zur Ausführung von Lese-und/oder Schreibzugriffen geeigneten Funktionseinheiten FE0, FE11, FE13 und FE14 ebenfalls mit Mitteln zum Kontaktieren mit den Steckplatzverbindungsmitteln und somit mit den Adreßleitungen AL0 ... AL15 versehen. Die restlichen Funktionseinheiten FE1, FE12 und FE15 sind jeweils mit einem hier nicht dargestellten Auswahlanschluß der Steckplätze SP1, SP12 und SP15 verbunden, von denen der Auswahlanschluß des Steckplatzes SP1 an die Adreßleitung AL1 angeschlossen ist. Entsprechend sind die Auswahlanschlüsse der Steckplätze SP12 und SP15 an die Adreßleitungen AL12 und AL15 angeschlossen. Die Funktionseinheiten FE0, FE11, FE13 und FE14 adressieren über diese Auswahlanschlüsse die Funktionseinheiten FE1, FE12 und FE15.
Die Funktionseinheiten FE0, FE11, FE13 und FE14 lesen programmgesteuert zur Ermittlung des eigenen Steckplatzcodes das Steckplatzcoderegister aus und aktivieren nach Maßgabe dieses Codes die ihnen jeweils zugeordnete Adreßleitung. Weiterhin überprüfen diese Einheiten, welche Adreßleitungen sonst noch aktiviert sind. Im Beispiel sind die Adreßleitungen AL0, AL11, AL13 und AL14 aktiviert, was darauf hinweist, daß in der Anordnung vier Einheiten gesteckt sind, die zur Ausführung von Lese- und/oder Schreibzugriffen auf andere Einheiten geeignet sind. Jede der Funktionseinheiten FE0, FE11, FE13 oder FE14 ermittelt aus diesen Steckplatzcodes ihren Platzcode innerhalb der Anordnung. Die Funktionseinheit FE0 ermittelt aus ihrem Steckplatzcode 0 und den restlichen Steckplatzcodes 11, 13 und 14 einen Platzcode 1, die Funktionseinheit FE11 aus ihrem Steckplatzcode 11 und den restlichen Steckplatzcodes 0, 13, 14 einen Platzcode 2 und entsprechend die Funktionseinheit FE13, FE14 einen Platzcode 3, 4. Das bedeutet, daß entsprechend dem vorgegebenen Auswahlcode der Arbiter der Funktionseinheit FEll aktiv geschaltet wird, während der jeweilige Arbiter der Funktionseinheiten FE0, FE13 und FE14 passiv geschaltet bleibt. Wäre die Funktionseinheit FE0 in dem Steckplatz SP0 nicht gesteckt, so würde entsprechend der beschriebenen Funktions- und Wirkungsweise der Anordnung und der Vorgabe im Hinblick auf den Auswahlcode der Arbiter der Funktionseinheit FE13 die Busverwaltung übernehmen.

## Patentansprüche

1. Anordnung mit
- mehreren Steckplätzen (SP0, ...), die über einen Daten- und Steuerleitungen aufweisenden Systembus (SYB) und über Adreßleitungen (AL0 ... AL15) miteinander verbunden sind,
- Mitteln zum Erzeugen eines Steckplatzcodes für jeden Steckplatz (SP0, ...),
- steckbaren Funktionseinheiten (FE0, ...), von denen mindestens zwei geeignet sind, Lese- und/oder Schreibzugriffe auf andere Einheiten über den Systembus auszuführen, und die jeweils aufweisen:
- Mittel zum Einlesen seines eigenen Steckplatzcodes,
- einen Arbiter zum Verwalten des Systembusses, wobei der Arbiter entsprechend einem Auswahlcode aktivierbar ist,
**dadurch gekennzeichnet**,
- daß an Verbindungsmittel der Steckplätze (SP0, ...) Busanforderungs-, Buszuteilungs- und Busverriegelungsleitungen (BA1, ...; BR1, ...; BL) geführt sind,
- daß die Lese- und/oder Schreibzugriffe ausführenden Funktionseinheiten jeweils eine zu ihrem eingelesenen Steckplatzcode zugeordnete Adreßleitung aktivieren und daß diese Einheiten ferner aufweisen:
- Mittel zum Verbinden mit den Busanforderungs-, Buszuteilungs- und Busverriegelungsleitungen (BA1, ...; BR1, ...; BL),
- Mittel zum Einlesen der Steckplatzcodes durch Überprüfung der aktivierten Adreßleitungen,
- Mittel zum Ermitteln ihres eigenen Platzcodes innerhalb der Anordnung aus allen eingelesenen Steckplatzcodes,
- Mittel zum Aktivieren des Arbiters für den Fall, daß der Platzcode dem vorgegebenen Auswahlcode entspricht, wobei dieser Arbiter während des Betriebs der Anordnung aktiv ist und die restlichen Arbiter passiv geschaltet bleiben.

2. Speicherprogrammierbare Steuerung mit einer Anordnung nach Anspruch 1.

3. Speicherprogrammierbare Steuerung mit einem jeweils eine Anordnung nach Anspruch 2 aufweisenden Zentralgerät und mindestens einem Erweiterungsgerät, die über ein den Systembus (SYB) und die Adreßleitungen (AL0, ...) aufweisendes Verbindungskabel verbunden sind.

4. Lese- und/oder Schreibzugriffe ausführende Funktionseinheit, die in eine mit Steckplätzen versehene Anordnung steckbar ist, wobei die Steckplätze über einen Daten- und Steuerleitungen aufweisenden Systembus und über Adreßleitungen miteinander verbunden sind und die Funktionseinheit versehen ist mit:
- Mitteln zum Einlesen ihres Steckplatzcodes,
- einem Arbiter zum Verwalten eines Systembusses, wobei der Arbiter entsprechend einem Auswahlcode aktivierbar ist,
**dadurch gekennzeichnet**,
daß die Funktionseinheit jeweils eine zu ihrem eingelesenen Steckplatzcode zugeordnete Adreßleitung aktiviert und daß die Funktionseinheit ferner aufweist:
- Mittel zum Verbinden mit Busanforderungs-, Buszuteilungs-und Busverriegelungsleitungen (BA1, ...; BR1, ...; BL) der Anordnung,
- Mittel zum Einlesen der Steckplatzcodes der Steckplätze durch Überprüfung der aktivierten Adreßleitungen,
- Mittel zum Ermitteln ihres eigenen Platzcodes innerhalb der Anordnung aus allen eingelesenen Steckplatzcodes,
- Mittel zum Aktivieren des Arbiters für den Fall, daß der Platzcode dem vorgegebenen Auswahlcode entspricht, wobei dieser Arbiter während des Betriebs der Anordnung aktiv geschaltet bleibt.

## Claims

1. Arrangement having:
- several module positions (SP0, ...) which are connected together by way of a system bus (SYB) that has data lines and control leads and by way of address lines (AL0 ... AL15),
- means for generating a module position code for each module position (SP0, ...),
- plug-in functional units (FE0, ...), at least two of which are suitable for executing read and/or write accesses to other units by way of the system bus, and each of which has:
- means for reading in its own module position code,
- an arbiter for the management of the system bus, wherein the arbiter can be activated in accordance with a selection code,
**characterised in that**
- bus request, bus arbitration and bus interlocking lines (BA1, ...; BR1, ...; BL) are carried on connecting means of the module positions (SP0, ...),
- each of the functional units executing the read and/or write accesses activates an address line assigned to the module position code that has been read in for it, and these units have furthermore:
- means for connection to the bus request, bus arbitration and bus interlocking lines (BA1, ...; BR1, ...; BL),
- means for reading in the module position code by checking the activated address lines,
- means for determining their own position code within the arrangement from all of the module position codes that have been read in,
- means for activating the arbiter in the case where the position code corresponds to the specified selection code, wherein, during operation of the arrangement, this arbiter is active and the remaining arbiters remain set at passive.

2. Programmable controller having an arrangement according to claim 1.

3. Programmable controller having a central unit which has a respective arrangement according to claim 2, and having at least one expansion unit, wherein the central and expansion units are connected together by way of a connecting cable that has the system bus (SYB) and the address lines (AL0, ...).

4. Functional unit which executes read and/or write accesses and which can be plugged into an arrangement provided with module positions, wherein the module positions are connected together by way of a system bus that has data lines and control leads and by way of address lines, and the functional unit is provided with:
- means for reading in its module position code,
- an arbiter for the management of a system bus, wherein the arbiter can be activated in accordance with a selection code,
**characterised in that**
the functional unit activates a respective address line assigned to the module position code that has been read in for it, and the functional unit has furthermore:
- means for connection to bus request, bus arbitration and bus interlocking lines (BA1, ...; BR1, ...; BL) of the arrangement,
- means for reading in the module position codes of the module positions by checking the activated address lines,
- means for determining its own position code within the arrangement from all of the module position codes that have been read in,
- means for activating the arbiter in the case where the position code corresponds to the specified selection code, wherein this arbiter remains set at active during operation of the arrangement.

## Revendications

1. Dispositif comportant
- plusieurs emplacements d'enfichage (SP0, ...), qui sont reliés par l'intermédiaire d'un bus (SYB) du système comportant des lignes de données et de commande et par l'intermédiaire de lignes d'adresses (AL0 à AL15),
- des moyens pour produire un code d'emplacement d'enfichage pour chaque emplacement d'enfichage (SP0, ...),
- des unités fonctionnelles enfichables (FE0, ...), parmi lesquelles au moins deux sont capables d'exécuter des accès en lecture et/ou en écriture sur d'autres unités par l'intermédiaire du bus du système et qui comportent chacune :
- des moyens pour mémoriser leur propre code d'emplacement d'enfichage,
- un arbitre destiné à la gestion du bus du système, l'arbitre étant activé en fonction d'un code de sélection,
caractérisé par le fait que
- des lignes de demande de bus, d'attribution de bus et de verrouillage de bus (BA1, ...; BR1, ...; BL) sont conduites aux moyens de connexion des emplacements d'enfichage (SP0, ...),
- les unités fonctionnelles capables d'exécuter des accès en lecture et/ou en écriture activent chacune une ligne d'adresse associée à leur code d'emplacement d'enfichage mémorisé et ces unités comportent en outre :
- des moyens pour la connexion aux lignes de demande de bus, d'attribution de bus et de verrouillage de bus (BA1, ... ; BR1, ... ; BL),
- des moyens pour la mémorisation des codes d'emplacements d'enfichage par contrôle des lignes d'adresses activées,
- des moyens pour la détermination de leur propre code d'emplacement à l'intérieur du dispositif à partir de tous les codes d'emplacements d'enfichage mémorisés,
- des moyens pour l'activation de l'arbitre pour le cas où le code d'emplacement correspond au code de sélection prescrit, cet arbitre étant actif pendant le fonctionnement du dispositif et les autres arbitres restant branchés de manière passive.

2. Commande par programme enregistré ayant un dispositif selon la revendication 1.

3. Commande par programme enregistré ayant un appareil central, qui comporte un dispositif selon la revendication 2, et au moins un appareil d'extension, lesquels appareils sont reliés par l'intermédiaire d'un câble de connexion comportant le bus (SYB) du système et les lignes d'adresses (AL0, ...).

4. Unité fonctionnelle, qui exécute des accès en lecture et/ou en écriture et qui peut être enfichée dans un dispositif muni d'emplacements d'enfichage, les emplacements d'enfichage étant reliés entre eux par l'intermédiaire d'un bus du système comportant des lignes de données et de commande et par l'intermédiaire de lignes d'adresses et l'unité fonctionnelle étant munie :
- de moyens pour la mémorisation de son code d'emplacement d'enfichage,
- d'un arbitre pour la gestion d'un bus du système, l'arbitre pouvant être activé en fonction d'un code de sélection,
caractérisée par le fait que
l'unité fonctionnelle active une ligne d'adresse associée à son code d'emplacement d'enfichage mémorisé et l'unité fonctionnelle comporte en outre :
- des moyens pour la connexion à des lignes de demande de bus, d'attribution de bus et de verrouillage de bus (BA1, ... ; BR1, ... ; BL) du dispositif,
- des moyens pour la mémorisation des codes des emplacements d'enfichage par contrôle des lignes d'adresses activées,
- des moyens pour la détermination de son propre code d'emplacement à l'intérieur du dispositif à partir de tous les codes d'emplacements d'enfichage mémorisés,
- des moyens pour l'activation de l'arbitre pour le cas où le code d'emplacement correspond au code de sélection prescrit, cet arbitre restant branché de manière active pendant le fonctionnement du dispositif.
